Europäisches Patentamt

European Patent Office

Office européen des brevets

(19)

(11) Veröffentlichungsnummer: **0 173 647**
**B1**

(12)
# EUROPÄISCHE PATENTSCHRIFT

(45) Veröffentlichungstag der Patentschrift:
**26.10.88**

(51) Int. Cl.⁴: **H 04 L 9/00**

(21) Anmeldenummer: **85810363.3**

(22) Anmeldetag: **05.08.85**

(54) **Chiffrier/Dechiffrierverfahren.**

(30) Priorität: **10.08.84 CH 3837/84**

(43) Veröffentlichungstag der Anmeldung:
**05.03.86 Patentblatt 86/10**

(45) Bekanntmachung des Hinweises auf die Patenterteilung:
**26.10.88 Patentblatt 88/43**

(84) Benannte Vertragsstaaten:
**CH DE FR GB IT LI NL SE**

(56) Entgegenhaltungen:
**DE - A - 3 244 537**
**US - A - 4 074 066**

**IBM TECHNICAL DISCLOSURE BULLETIN, Band 26, Nr. 1, Juni 1983, Selten 199-201, Yorktown Heights, US; W.D. HOPKINS: "Transaction incrementing message authentication key"**
**ELECTRONICS, Band 52, Nr. 13, 21. Juni 1979, Seiten 107-120, New York, US; H.J. HINDIN: "LSI-based data encryption discourages the data thief"**

(73) Patentinhaber: **GRETAG Aktiengesellschaft, Althardstrasse 70, CH-8105 Regensdorf (CH)**

(72) Erfinder: **Widmer, Walter Rudolf, Dreierweg 3, CH-8155 Niederhasli (CH)**

(74) Vertreter: **Pirner, Wilhelm et al, Patentabteilung der CIBA-GEIGY AG Postfach, CH-4002 Basel (CH)**

## Beschreibung

Die Erfindung betrifft ein Chiffrier-/Dechiffrierverfahren gemäss dem Oberbegriff des Anspruchs 1.

Eines der bekanntesten Chiffrierverfahren ist die sog. Bitstromchiffrierung (Stream Cipher), bei der die Nachricht bitweise mit einer gleichlangen (pseudo-) zufälligen Schlüsselsequenz verknüpft wird. Zur Erzielung einer hohen Sicherheit muss der die Schlüsselsequenz determinierende Chiffrierschlüssel häufig gewechselt bzw. variiert werden, wozu aber die Übertragung von zusätzlicher Information nötig ist.

Ein weiteres Standard-Chiffrierverfahren ist die sogenannte Blockchiffrierung, bei der mittels eines durch einen Schlüssel determinierten Algorithmus mehr oder weniger grosse Klartextblöcke in entsprechende Chiffratblöcke und umgekehrt umgewandelt werden. Dabei werden im wesentlichen zwei Betriebsweisen unterschieden (siehe z.B. ANSI X3.106 1983). Es sind dies der sogenannte ECB-Mode (Electronic Code Book Mode) und der sogenannte CBC-Mode (Cipher Block Chaining Mode). Ersterer bietet vielfach nur eine ungenügende Sicherheit, da gleiche Klartextblöcke immer in gleiche Chiffratblöcke abgebildet werden. Letzterer bietet zwar aufgrund der Verkettung von Klartextblöcken eine erhöhte Sicherheit, benötigt dafür aber die Übertragung eines Initialisierungsvektors beim Start.

Zum Stand der Technik ist die Zeitschrift Electronics, Bd. 52, No. 13, 21. Juni 1979, Seiten 107–120, zu nennen. Diese beschreibt die verschiedenen Betriebsmöglichkeiten des sog. DEA (Data Encryption Algorithm). In DE-A 3 244 537 ist ferner ein Chiffrierverfahren beschrieben, bei dem die Nachricht in zwei Blöcke unterteilt und von jedem Block ein Schlüssel abgeleitet wird, mit dem dann der jeweils andere Block chiffriert wird. In IBM's Technical Disclosure Bulletin, Vol 26, No. 1, Juni 1983, Seiten 188–201 ist weiter ein Authentifizierverfahren angegeben, bei dem die Nachricht blockweise chiffriert wird, wobei jeweils ein Chiffratblock mit dem nächstfolgenden Klartextblock verknüpft wird usf., bis die gesamte Nachricht in einen einzigen Authentifikationsblock (MAC) konzentriert ist. Schliesslich ist in US-A 4 074 066 noch ein Block-Chiffrierverfahren offenbart, bei dem der für die Chiffrierung eines Blockes verwendete Schlüssel jeweils aus dem Klartext, dem Chiffrat und dem Chiffrierschlüssel des vorangehenden Blocks gebildet wird.

Durch die Erfindung soll nun ein verbessertes Chiffrierverfahren geschaffen werden, welches keine Übertragung von zusätzlicher Information benötigt und trotzdem eine erhöhte Sicherheit gewährleistet.

Das erfindungsgemässe Verfahren ist im Anspruch 1 beschrieben. Bevorzugte Ausführungsformen und Weiterbildung sind Gegenstand der abhängigen Ansprüche.

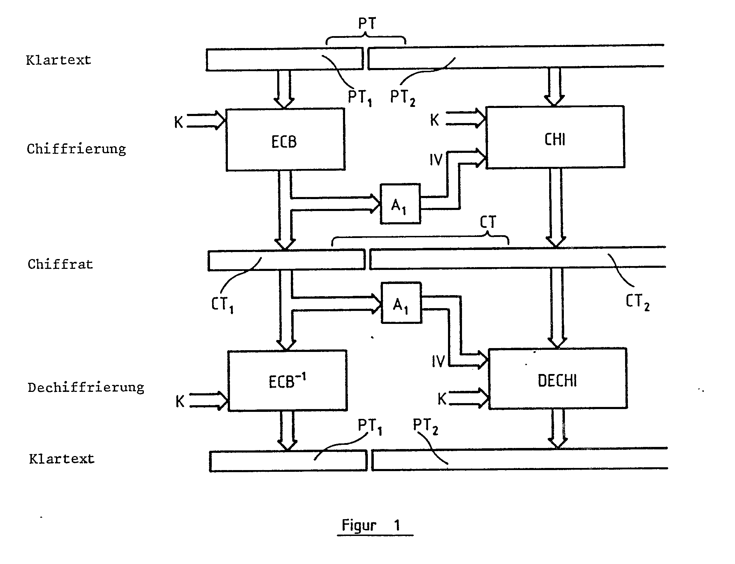

Im folgenden wird die Erfindung anhand der Zeichnung näher erläutert. Die Figuren 1–2 zeigen das Funktionsschema von zwei verschiedenen Ausführungsbeispielen des erfindungsgemässen Chiffrierverfahrens.

Das allgemeine Prinzip ist in Fig. 1 dargestellt. Der zu chiffrierende Klartext PT wird in einen ersten Abschnitt $PT_1$ und in einen zweiten, den restlichen Text umfassenden Abschnitt $PT_2$ unterteilt. Der erste Abschnitt $PT_1$ wird nun nach irgendeinem Standard-Blockchiffrierverfahren ECB im ECB-Mode (Electronic Code Book Mode) chiffriert, wobei der Chiffrieralgorithmus durch einen Chiffrierschlüssel K determiniert ist. Das Ergebnis dieses ersten Chiffriervorgangs ist ein erster Abschnitt $CT_1$ des Chiffrats CT.

Dieser erste Chiffratabschnitt $CT_1$ wird nun gemäss der Erfindung bei der Chiffrierung des zweiten Textabschnitts $PT_2$ als Initialisierungsvektor IV für das dabei zum Einsatz gelangende Chiffrierverfahren CHI verwendet. Dabei kann der erste Chiffratabschnitt $CT_1$ sowohl unmittelbar als auch passend transformiert (Transformation $A_1$) als Initialisierungsvektor IV verwendet werden. Die Transformation $A_1$ kann eventuell auch vom Chiffrierschlüssel K abhängig sein. Als Ergebnis dieser zweiten Chiffrierung entsteht ein zweiter Abschnitt $CT_2$ des Chiffrats CT.

Die Rückumwandlung des Chiffrats CT in den Klartext PT erfolgt analog. Zuerst wird der erste Chiffratabschnitt $CT_1$ mittels einer zum Blockchiffrierverfahren ECB inversen Operation $ECB^{-1}$ dechiffriert, um den ersten Abschnitt $PT_1$ des Klartexts PT zu ergeben. Danach wird der erste Chiffratabschnitt $CT_1$, gegebenenfalls nach Transformation $A_1$, als Initialisierungsvektor IV dem zum Chiffrierprozess CHI inversen Dechiffrierprozess DECHI zugeführt und der zweite Abschnitt $CT_2$ des Chiffrats CT entsprechend dechiffriert, um wieder zum zweiten Abschnitt $PT_2$ des Klartexts PT zu führen. Bei beiden Dechiffrierprozessen wird natürlich wieder der Chiffrierschlüssel K zur Determinierung der Chiffrier-/Dechiffrieralgorithmen verwendet.

Für die Blockchiffrierung ECB kann im einfachsten Fall ein 64-Bit-Standard-Blockchiffrieralgorithmus gewählt werden (beispielsweise gemäss ANSI X3.106). Dies hat aber gewisse Nachteile, da der erste Klartextabschnitt in der Praxis normalerweise redundanzbehaftet ist. Sehr oft, und speziell in den ersten 8 Zeichen des Klartexts, werden bei weitem nicht alle Bitkombinationen ausgenützt, oder jedenfalls mit stark unterschiedlichen Auftretenswahrscheinlichkeiten. Demzufolge weist auch der daraus abgeleitete Initialisierungsvektor IV eine zu kleine Mannigfaltigkeit auf.

Dieses Problem kann nun zum Beispiel dadurch gelöst werden, dass die Länge des ersten Klartextabschnitts grösser, beispielsweise mindestens etwa 128 bit gewählt wird. Der dabei entstehende entsprechend lange Chiffratabschnitt kann dann durch eine passende Transformation auf die für die Verwendung als Initialisierungsvektor übliche Form bzw. Länge (meist 64 bit) gebracht werden.

Eine für die Praxis günstigere Lösung des er-

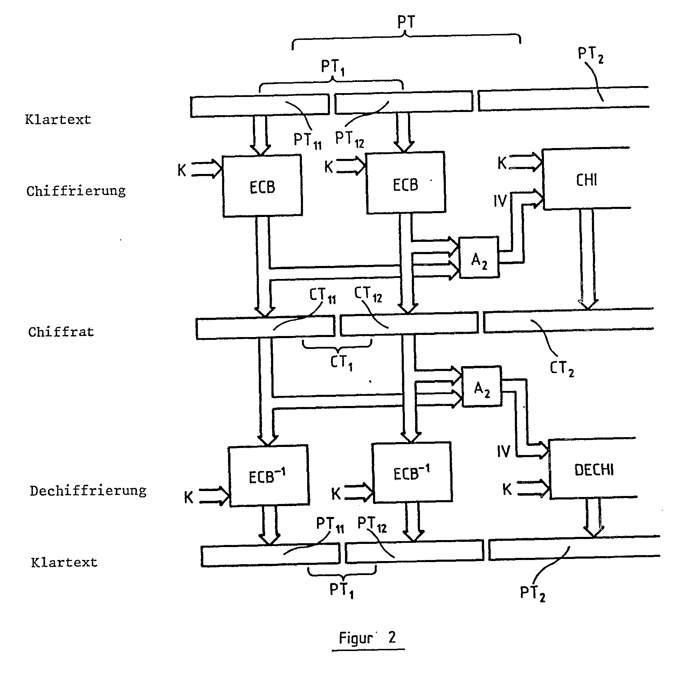

wählten Redundanzproblems ist in Fig. 2 dargestellt. Hier wird der erste Abschnitt $PT_1$ des Klartexts PT in zwei 64 bit lange Blöcke $PT_{11}$ und $PT_{12}$ unterteilt, und jeder dieser Blöcke wird für sich nach einem 64-Bit-Standard-Blockchiffrierverfahren im ECB-Mode chiffriert. Das Resultat dieser ersten beiden Chiffrieroperationen sind zwei Chiffrat-Blöcke $CT_{11}$ und $CT_{12}$, die zusammen wieder den ersten Chiffratabschnitt $CT_1$ ergeben. Diese beiden Chiffrat-Blöcke $CT_{11}$ und $CT_{12}$ werden nun in einer Abbildung $A_2$ zum Initialisierungsvektor IV für die Chiffrierung/Dechiffrierung des folgenden Textteils kombiniert.

Wie schon erwähnt, kann als Blockchiffrierverfahren irgendein beliebiger Blockchiffrieralgorithmus im ECB-Mode verwendet werden. Speziell kommt z.B. ein DES (Data Encryption Standard)-Verfahren im EBC-Mode in Frage (siehe z.B. FIPS Pub. 46 und ANSI X3.106). Analoges gilt für den für den restlichen Text verwendeten Chiffrieralgorithmus. Es kann sich hier z.B. um einen DES-Algorithmus im CBC-(Cipher Block Chaining)-Mode oder im CFB (Cipher Feed Back)-Mode oder auch um ein Bitstromchiffrierverfahren (Stream Cipher) handeln.

Der Kernpunkt des erfindungsgemässen Verfahrens besteht also gemäss vorstehenden Ausführungen darin, dass die Initialisierungsinformation für den Chiffrieralgorithmus dem Text selbst entnommen wird. Auf diese Weise ist es möglich, ohne Übermittlung von Zusatzinformationen zu einer Sicherheit zu kommen, die derjenigen von herkömmlichen Bitstromchiffrierverfahren oder Blockchiffrierverfahren im CBC-Mode entspricht.

**Patentansprüche**

1. Chiffrier/Dechiffrierverfahren, bei dem die Transformation von Klartext zu Chiffrat und umgekehrt mittels eines durch wenigstens einen Chiffrierschlüssel determinierten Chiffrieralgorithmus erfolgt, wobei ein erster Abschnitt des Klartexts nach einem Blockchiffrierverfahren im ECB-Mode chiffriert und der entsprechende Abschnitt des Chiffrats entsprechend dechiffriert wird, und wobei ferner der übrige Teil des Klartexts bzw. Chiffrats unter Mitverwendung des ersten Chiffratabschnitts als Initialisierungsvektor für den Chiffrieralgorithmus chiffriert bzw. dechiffriert wird, dadurch gekennzeichnet, dass für den gesamten auf den ersten Abschnitt folgenden übrigen Teil des Klartexts bzw. Chiffrats ein und derselbe Initialisierungsvektor verwendet wird.

2. Verfahren nach Anspruch 1, dadurch gekennzeichnet, dass der erste Abschnitt des Chiffrats vor seiner Verwendung als Initialisierungsvektor mittels einer vorzugsweise schlüsselabhängigen Abbildung transformiert wird.

3. Verfahren nach Anspruch 1 oder 2, dadurch gekennzeichnet, dass der erste Abschnitt wenigstens 128 bit lang ist.

4. Verfahren nach einem der Ansprüche 1–3, dadurch gekennzeichnet, dass die Chiffrierung/Dechiffrierung des übrigen Teils des Klartexts bzw. Chiffrats mittels Blockchiffrierung im CBC-Mode erfolgt, wobei als Initialisierungsvektor für die Chiffrierung/Dechiffrierung des ersten auf den ersten Abschnitt folgenden Textblocks der erste Abschnitt des Chiffrats direkt oder in transformierter Form verwendet wird.

5. Verfahren nach einem der Ansprüche 1–3, dadurch gekennzeichnet, dass die Chiffrierung/Dechiffrierung des übrigen Teils des Klartexts bzw. Chiffrats im CFB-Mode (Cipher Feed Back Mode) erfolgt.

6. Verfahren nach einem der Ansprüche 1–3, dadurch gekennzeichnet, dass die Chiffrierung/Dechiffrierung des übrigen Teils des Klartexts bzw. Chiffrats mittels Bitstromchiffrierung erfolgt.

7. Verfahren nach einem der Ansprüche 1–6, dadurch gekennzeichnet, dass zur Chiffrierung/Dechiffrierung des ersten Abschnitts des Klartexts bzw. Chiffrats ein DES-Verfahren (Data Encryption Standard) verwendet wird.

8. Verfahren nach Anspruch 4, dadurch gekennzeichnet, dass als im CBC-Mode arbeitende Blockchiffrierung ein DES-Verfahren (Data Encryption Standard) verwendet wird.

9. Verfahren nach einem der Ansprüche 1–8, dadurch gekennzeichnet, dass der erste Abschnitt des Klartexts in zwei Blöcke eingeteilt wird, dass diese zwei Blöcke je für sich mittels Blockchiffrierung im ECB-Mode chiffriert werden, und dass der Initialisierungsvektor für die Chiffrierung des übrigen Teils des Klartexts aus den beiden bei der Chiffrierung der beiden Blöcke des Klartexts entstandenen Chiffratblöcken gebildet wird.

10. Verfahren nach einem der Ansprüche 1–3, dadurch gekennzeichnet, dass der erste Abschnitt des Klartexts in zwei Blöcke eingeteilt wird, dass diese zwei Blöcke je für sich mittels Blockchiffrierung im ECB-Mode gemäss einem DES-Verfahren chiffriert werden, und dass der Initialisierungsvektor für die Chiffrierung des übrigen Teils des Klartexts aus den beiden bei der Chiffrierung der beiden Blöcke des Klartexts entstandenen Chiffratblöcken gebildet wird, und dass ferner die Chiffrierung/Dechiffrierung des übrigen Teils des Klartexts bzw. Chiffrats mittels Blockchiffrierung gemäss einem DES-Verfahren im CBC-Mode erfolgt, wobei als Initialisierungsvektor für die Chiffrierung/Dechiffrierung des ersten auf den ersten Abschnitt folgenden Textblocks der erste Abschnitt des Chiffrats direkt oder in transformierter Form verwendet wird.

**Claims**

1. Encoding/decoding process, in which the transformation of clear text into encoded text and vice versa takes place by means of an encoding algorithm determined by at least one key, a first section of the clear text being encoded according to a block encoding process in the ECB mode and the corresponding section of the coded text being correspondingly decoded, and in addition the remaining part of the clear text or encoded text being encoded or decoded respectively by using the first coded text section as the initialisation vector for the encoding algorithm, characterised in that one and the same initialisation vector is used for the whole remaining part of the clear text or encoded text following the first section.

2. Process according to Claim 1, characterised in that the first section of the encoded text is transformed by means of a preferably key-dependent transformation element before being used as the initialisation vector.

3. Process according to Claims 1 or 3, characterised in that the first section is at least 128 bits long.

4. Process according to one of Claims 1 to 3, characterised in that the encoding/decoding of the remaining part of the clear text or encoded text respectively takes place by means of block encoding in the CBC mode, the first section of the encoded text being used directly or in the transformed form as the initialisation vector for the encoding/decoding of the first block of text following the first section.

5. Process according to one of Claims 1 to 3, characterised in that the encoding/decoding of the remaining part of the clear text or encoded text takes place in the CFB mode (Cipher Feed Back Mode).

6. Process according to one of Claims 1 to 3, characterised in that the encoding/decoding of the remaining part of the clear text or encoded text respectively takes place by means of bitstream encoding.

7. Process according to one of Claims 1 to 6, characterised in that a DES process (Data Encryption Standard) is used for encoding/decoding the first section of the clear text or encoded text respectively.

8. Process according to Claim 4, characterised in that a DES process (Data Encryption Standard) is used as the block encoding operating in the CBC mode.

9. Process according to one of Claims 1 to 8, characterised in that the first section of the clear text is divided into two blocks, that said two blocks are each for their part encoded by means of block encoding in the ECB mode, and that the initialisation vector for the encoding of the remaining part of the clear text is formed from the two encoded text blocks resulting from the encoding of the two blocks of the clear text.

10. Process according to one of Claims 1 to 3, characterised in that the first section of the clear text is divided into two blocks, that said two blocks are each for their part encoded by means of block encoding in the ECB mode according to a DES process, and that the initialisation vector for the encoding of the remaining part of the clear text is formed from the two encoded text blocks resulting from the encoding of the two blocks of the clear text, and that in addition the encoding/decoding of the remaining part of the clear text or encoded text respectively takes place by means of block encoding according to a DES process in the CBC mode, the first section of the encoded text being used directly or in the transformed form as the initialisation vector for the encoding/decoding of the first block of text following the first section.

**Revendications**

1. Procédé de chiffrage/déchiffrage dans lequel la transformation du texte en clair en texte chiffré, et l'inverse, s'effectuent au moyen d'un algorithme de chiffrage déterminé par au moins une clé de chiffrage, un premier tronçon du texte en clair étant chiffré selon un procédé de chiffrage par blocs selon le mode «ECB» et le tronçon correspondant du texte chiffré étant déchiffré de façon correspondante et, en outre, la partie restante du texte en clair, ou du texte chiffré étant chiffrée ou déchiffrée grâce à l'utilisation du premier tronçon de texte chiffré constituant un vecteur d'initialisation pour l'algorithme de chiffrage, procédé caractérisé en ce qu'on utilise un seul et même vecteur d'initialisation pour l'ensemble de la partie restante qui suit le premier tronçon du texte en clair, ou du texte chiffré.

2. Procédé selon la revendication 1, caractérisé en ce qu'avant son utilisation comme vecteur d'initialisation, le premier tronçon du texte chiffré est transformé au moyen d'une représentation, de préférence dépendante de la clé.

3. Procédé selon la revendication 1 ou 2, caractérisé en ce que le premier tronçon a une longueur d'au moins 128 bits.

4. Procédé selon une des revendications 1 à 3, caractérisé en ce que le chiffrage de la partie restante du texte en clair, ou le déchiffrage du texte chiffré, s'effectuent au moyen du chiffrage par blocs en mode CBC, le premier tronçon du texte chiffré étant utilisé, directement ou sous une forme transformée, en tant que vecteur d'initialisation pour le chiffrage/déchiffrage du premier bloc de texte suivant le premier tronçon.

5. Procédé selon une des revendications 1 à 3, caractérisé en ce que le chiffrage de la partie restante du texte en clair ou le déchiffrage du texte chiffré, s'effectuent selon le mode CFB («Cipher Feed Back Mode»; mode de chiffrage avec rétroaction).

6. Procédé selon une des revendications 1 à 3, caractérisé en ce que le chiffrage de la partie restante du texte en clair, ou le déchiffrage du texte chiffré, s'effectuent grâce à un chiffrage par flux de bits.

7. Procédé selon une des revendications 1 à 6, caractérisé en ce que pour le chiffrage du premier tronçon du texte en clair ou pour le déchiffrage du texte chiffré, on utilise un procédé DES («Data Encryption Standard»; norme de chiffrage de données).

8. Procédé selon la revendication 4, caractérisé en ce qu'on utilise un procédé DES («Data Encryption Standard») en tant que procédé de chiffrage par blocs travaillant selon le mode CBC.

9. Procédé selon une des revendications 1 à 8, caractérisé en ce que le premier tronçon du texte en clair est partagé en deux blocs, en ce que ces deux blocs sont chiffrés chacun grâce à un chiffrage par blocs selon le mode ECB, et en ce que le vecteur d'initialisation pour le chiffrage des autres parties de texte en clair est formé à partir des deux blocs de texte chiffré issus du chiffrage des deux blocs du texte en clair.

10. Procédé selon l'une des revendications 1 à 3, caractérisé en ce que le premier tronçon du texte en clair est partagé en deux blocs, en ce que ces deux blocs sont chacun chiffrés grâce à un chiffrage par blocs selon le mode ECB et au moyen d'un procédé DES, et en ce que le vecteur d'initialisation destiné au chiffrage de la partie restante du texte en clair est formé à partir des deux blocs de texte chiffré issus du chiffrage des deux blocs de texte en clair, et en ce qu'en outre le chiffrage de la partie restante du texte en clair, ou le déchiffrage du texte chiffré, s'effectuent grâce à un chiffrage par blocs selon un procédé DES avec le mode CBC, le premier tronçon du texte chiffré étant utilisé directement ou sous une forme transformée, en tant que vecteur d'initialisation pour le chiffrage/déchiffrage du premier bloc de texte suivant le premier tronçon.

Figur 1

Figur 2